# FASCICULE DE BREVET EUROPEEN

(11) **EP 2 096 700 B1**
(45) Date de publication et mention de la délivrance du brevet: **13.07.2011**
(21) Numéro de dépôt: 09290096.8
(22) Date de dépôt: 11.02.2009
(51) Int. Cl.: H01M 8/10, B01D 67/00, B05D 7/24, C08J 5/22

(54) **Procédé de fabrication d'une membrane polymérique à conduction ionique pour pile à combustible**
Herstellungsverfahren einer ionenleitenden Polymermembran für Brennstoffzelle
Method for manufacturing a ionically conductive polymer membrane for fuel cell

(30) Priorité: 29.02.2008 FR 0801137
(43) Date de publication de la demande: 02.09.2009
(73) Titulaire: Commissariat à l'Énergie Atomique et aux Énergies Alternatives, 75015 Paris (FR)
(72) Inventeur: Capron, Philippe, 38730 Le Pin (FR); Delmas, Jérôme, 33700 Merignac (FR); Martinent, Audrey, 38000 Grenoble (FR); Rougeaux, Isabelle, 38140 Rives (FR)
(74) Mandataire: Noel, Chantal Odile

(56) Documents cités:
- DE-A1- 19 911 413
- FR-A- 2 894 077
- US-A- 6 010 798
- K. YASUDA ET AL.: "Preparation of Thin Perfluosulfonate Cation-Exchanger Films by Plasma Polymerization for PEMFC" EXTENDED ABSTRACTS, ELECTROCHEMICAL SOCIETY, vol. 93/01, 1 janvier 1993 (1993-01-01), page 48, XP000421655 ISSN: 0160-4619
- Y. UCHIMOTO ET AL.: "Thin Cation-Exchanger Films by Plasma Polymerization of 1,3-Butadiene and Methyl Benzenesulfonate" JOURNAL OF THE ELECTROCHEMICAL SOCIETY, vol. 138, no. 11, 1 novembre 1991 (1991-11-01), pages 3190-3193, XP000325085 ISSN: 0013-4651

## Description

L'invention se rapporte à un procédé de fabrication d'une membrane polymérique à conduction ionique pour pile à combustible et à un coeur de pile à combustible comprenant une membrane obtenue par ce procédé. Elle se rapporte également à une pile à combustible comprenant une telle membrane et/ou un tel coeur de pile.

Le coeur d'une pile à combustible est généralement constitué d'une membrane conductrice. L'oxydation du combustible a lieu à l'anode, à l'interface entre l'électrode et la membrane. Cette réaction nécessite un catalyseur qui est constitué d'un métal ou d'un alliage de métal noble ou non noble. La réduction du comburant a lieu à la cathode à l'interface entre l'électrode et la membrane. Cette réaction nécessite également un catalyseur, qui est lui aussi constitué d'un métal noble ou non, voire d'un complexe métallique.

La nature des matériaux constituant ce coeur de pile dépend principalement de la nature du combustible et du comburant utilisés mais également du type de conduction de la membrane.

La membrane peut conduire les cations ou les anions.

Dans le cas des cations, c'est généralement le proton qui transite de l'anode vers la cathode, comme pour les piles de type à membrane à échange de proton, PEMFC (Proton Exchange Membrane Fuel Cell), et de type méthanol, DMFC (Direct Methanol Fuel Cell).

Dans le cas des anions, c'est l'ion hydroxonium qui transite de la cathode vers l'anode. Ce type de pile est couramment dénommé pile à combustible alcalin solide, SAFC, (Solid Alkaline Fuel Cell).

La membrane possède des groupements ioniques de charge opposée à celle de l'ion à transporter. En effet, dans le cas du transport de proton, la membrane possède des fonctions acides de type sulfonique, carboxylique ou phosphonique. Dans le cas du transport des ions OH⁻, la membrane possède des fonctions de type ammonium quaternaire.

Le procédé le plus répandu pour fabriquer un coeur de pile dans une architecture de pile consiste à utiliser un assemblage électrode-membrane-électrode par collage à chaud d'une membrane et de deux électrodes préalablement formées. Cette technique est couramment utilisée pour réaliser un empilement de coeur de pile avec des plaques bipolaires pour former un empilement (stack).

Un autre procédé consiste à juxtaposer des coeurs de piles sur un substrat afin de former une architecture planaire. Une des solutions technologiques permettant d'obtenir une telle architecture consiste à créer *in situ* les différents éléments du coeur de pile par dépôts de différents matériaux. Le catalyseur anodique est déposé sur le substrat en voie humide (pulvérisation d'une "encre" contenant le catalyseur, du solvant et d'un liant), ou en voie sèche (dépôt par vaporisation plasma ou dépôt chimique par vaporisation). La membrane est ensuite formée à partir d'une solution de ionomère (mélange d'un polymère conducteur ionique et d'un solvant). La cathode est ensuite réalisée de la même manière que l'anode.

L'utilisation d'une solution de ionomère est relativement aisée et permet d'obtenir des membranes de très bonne qualité. Cependant, dans le cas d'architecture complexe ou de substrat sensible au solvant, il est très difficile d'obtenir un film se conformant parfaitement à la surface du substrat.

Afin de pallier ces difficultés, de nouveaux procédés ont été développés principalement en voie sèche, c'est-à-dire sans utilisation de solvant. Ces nouveaux procédés sont basés sur le principe de dépôts par technologie sous vide. Ces technologies consistent à générer une membrane à la surface du substrat ou de l'électrode à partir d'un précurseur généralement gazeux dans une enceinte sous vide. La membrane ainsi obtenue présente une épaisseur uniforme quelque soit la géométrie du substrat.

Ainsi, le brevet US 6010798 décrit l'obtention d'une membrane conductrice protonique par technologie sous vide de type dépôt chimique en phase vapeur assisté par plasma ou PECVD (Plasma Enhanced Chemical Vapor Deposition).

Cette technologie consiste à placer dans une enceinte sous vide le substrat sur lequel la membrane doit être réalisée. Un vide primaire ou secondaire est ensuite établi et différents précurseurs chimiques sont injectés. Les précurseurs sont constitués de chaînes aliphatiques ou fluorocarbonées, ou de monomères sulfonés ou non. La fonction ionique est apportée soit grâce à l'utilisation d'un monomère portant un groupement ionique, soit en utilisant un gaz de type SO₂ ou SO₃ ou trifluorométane sulfonique ou encore acides phosphoniques.

Le plasma appliqué au mélange permet d'apporter de l'énergie pour générer des réactions chimiques permettant d'obtenir un réseau que certains appellent improprement un système polymère.

Cependant, ce procédé, bien qu'il permette effectivement d'obtenir un dépôt uniforme se conformant à la surface du substrat, a de très gros inconvénients.

En effet, l'énergie apportée par le plasma engendre une forte réticulation du dépôt. Or, la membrane, pour être conductrice protonique, doit pouvoir gonfler en présence d'eau. Ce gonflement est naturel et est lié à l'affinité entre les fonctions ioniques et l'eau. La conduction de la membrane nécessite d'une part la présence d'eau et d'autre part, la présence de fonctions ioniques. Une réticulation importante de la membrane limite ce gonflement et engendre par conséquent une faible conductivité. Enfin, l'énergie apportée par le plasma dégrade les molécules organiques et plus particulièrement les liaisons S-O. Par conséquent, il est très difficile de contrôler de façon précise et reproductible le taux de fonctions sulfoniques dans ces dépôts.

La demande de brevet français FR-A-2 894 077 divulgue un procédé de fabrication d'une pile à combustible en couches minces, dans lequel, également, le dépôt de la membrane est effectué par un procédé de dépôt chimique en phase vapeur assisté par plasma. Ce procédé comporte les étapes successives de dépôt, sur un substrat diffuseur de gaz, d'une première électrode de carbone poreux comportant également un catalyseur, puis une membrane réalisée en un matériau conducteur ionique, et d'une seconde électrode de carbone poreux comportant également un catalyseur.

En outre, la demande de brevet allemand DE 19911413 divulgue un procédé de fabrication de fines couches membranaires d'échange cationique contenant un groupement acide sulfonique, ce procédé impliquant une première étape de déposition plasma à partir de monomères organiques ayant un point d'ébullition inférieur ou égal à 300°C, suivie d'une seconde étape de traitement de la membrane obtenue avec une solution aqueuse d'hydrogénosulfite et éventuellement un acide dilué.

Un autre procédé de préparation de films fins d'échange cationique de type perfluorosulfonate par polymérisation activée par plasma d'acide triflique et d'hexafluoropropylène, ainsi que leur utilisation comme membrane de pile à combustible est divulgué par Extended Abstracts, Electrochemical Society, vol. 93/01, 1 janvier 1993, page 48*.*

La revue Journal Of The Electrochemical Society, vol. 138, no. 11, 1 novembre 1991, pages 3190-3193 divulgue également des films fins d'échange cationique obtenus par polymérisation activée par plasma de 1,3-butadiène et de benzènesulfonate de méthyle.

Le brevet US 4225647 décrit un procédé sous vide qui n'utilise pas de plasma. Ce brevet ne décrit pas la fabrication d'une membrane à conduction ionique pour pile à combustible mais un procédé de dépôt de polyparaxylylène sur un objet. La technique décrite dans ce brevet s'apparente à la polymérisation par dépôt en phase vapeur ou VDP (Vapor Deposition Polymerization) et consiste à sublimer un monomère qui est ensuite activé thermiquement à des températures supérieures à 500°C pour engendrer une polymérisation lors de la condensation du monomère sur le substrat.

Par cette technique, la structure chimique est bien contrôlée et le polymère formé est non réticulé. Dans ce document, la fonction ionique est incorporée par post-traitement du film, c'est-à-dire dans une deuxième étape et non pas *in situ.*

Le polyparaxylylène contenant des noyaux aromatiques, il est en effet possible d'introduire des fonctions sulfoniques par traitement du film par une solution d'acide concentré. Ce traitement induit cependant d'une part des coupures de chaînes du polymère et, d'autre part, une sulfonation difficilement contrôlable. Les propriétés de la membrane sont par conséquent très hétérogènes.

Ce document évoque la possibilité d'utiliser des monomères préalablement fonctionnalisés, ici par des acides. Cependant, cette fonctionnalisation ne résiste pas aux températures élevées nécessaires à l'activation du monomère pour assurer sa polymérisation. D'autre part, ces monomères fonctionnalisés ne sont pas sublimables car ils se dégradent avant sublimation. En effet, l'existence de fortes interactions moléculaires de type ionique et de type liaison hydrogène limite l'évaporabilité de ces molécules.

L'invention vise à pallier les inconvénients des procédés de l'art antérieur en proposant un procédé qui n'utilise pas de solvant et qui permette d'obtenir une membrane conductrice d'ions, non réticulée, épousant parfaitement la forme d'un substrat de géométrie complexe (3D) et possédant de très bonnes propriétés de conduction ionique.

A cet effet, l'invention propose un procédé dans lequel on utilise un ou plusieurs monomères polymérisables et sublimables ou évaporables sous vide, au moins deux des monomères portant déjà une fonction précurseur de la fonction de conduction ionique.

A cet effet, l'invention propose un procédé de fabrication d'une membrane polymérique à conduction ionique pour pile à combustible caractérisé en ce qu'il comprend une étape de dépôt chimique par vaporisation plasma d'au moins deux monomères polymérisables identiques ou différents, chacun comprenant :
- au moins un groupement polymérisable, et
- au moins un groupement précurseur de la fonction de conduction ionique choisi dans le groupe formé par un ester de phosphonyle, un ester d'acyle, un ester de sulfonyle, un halogénure de carbonyle, ou un halogénure de thionyle.

Dans un premier mode de réalisation, au moins deux monomères sont identiques et portent un groupement polymérisable par polymérisation radicalaire.

Dans ce cas, de préférence, ledit groupement polymérisable est un groupe glycidyle ou éthylénique.

Dans un second mode de réalisation, lesdits au moins deux monomères sont différents l'un de l'autre, au moins l'un des monomères portant deux groupements polymérisables qui sont différents des deux groupements polymérisables de l'autre monomère, tout en étant polymérisables par polycondensation avec ces deux groupements polymérisables de l'autre monomère.

Dans ce cas, de préférence, les groupements polymérisables sont choisis parmi un groupe acide, un groupe anhydride, un groupe alcool, un groupe halogénure, un groupe urée, et un groupe amine.

Dans tous les modes de réalisation de l'invention, chaque monomère est constitué d'une chaîne aromatique ou aliphatique portant ledit au moins un groupement polymérisable et ledit au moins un groupement précurseur de la fonction de conduction ionique.

L'invention propose également un coeur de pile à combustible comprenant une membrane obtenue par le procédé de l'invention.

Elle propose aussi une pile à combustible comprenant une membrane obtenue par le procédé de invention ainsi qu'une pile à combustible comprenant un coeur de pile selon l'invention.

L'invention sera mieux comprise et d'autres caractéristiques et avantages de celle-ci apparaitront plus clairement à la lecture de la description explicative qui suit.

La membrane à conduction ionique pour pile à combustible de l'invention est fabriquée à partir de monomères qui portent une fonction polymérisable. Les monomères peuvent tous avoir des fonctions polymérisables identiques, auquel cas la fonction polymérisable est une fonction polymérisable par polymérisation radicalaire. De préférence, cette fonction polymérisable est du type glycidyle ou éthylénique.

Ils peuvent également avoir des fonctions polymérisables différentes. Dans ce cas, la polymérisation se fait par polycondensation des fonctions polymérisables de l'un avec les fonctions polymérisables de l'autre. Les fonctions polymérisables dans ce cas, sont de préférence des fonctions acides, anhydrides, alcools, amines, halogénures ou urée.

Par polymérisation de ces monomères, on obtiendra une membrane polymérique.

Mais pour obtenir une membrane polymérique à conduction ionique, l'invention utilise des monomères qui, outre la fonction polymérisable, sont fonctionnalisés par des fonctions ester de sulfonyle de formule SO₃R, des fonctions ester d'acyle de formule COOR, ou des fonctions ester de phosphonyle de formule PO(OR)₂, ou des fonctions halogénure de carbonyle de formule COX, ou des fonctions halogénure de thionyle de formule SOX'₂, et non pas, comme dans l'art antérieur, fonctionnalisés par des fonctions acides.

Dans les formules qui précèdent, R peut être une chaîne aromatique polyphatique ainsi qu'un dérivé de celle-ci, et X' représente un halogénure, tel qu'un chlore.

Ces fonctions de type ester ou halogénure décrites ci-dessus ne présentent pas de fortes interactions moléculaires et sont par conséquent sublimables ou évaporables. Une fois le polymère obtenu, les fonctions de type ester ou halogénure décrites ci-dessus sont converties en leur forme acide par hydrolyse dans l'eau ou dans une solution acide ou basique. Le polymère obtenu devient alors conducteur ionique.

Ainsi, les monomères utilisés dans l'invention ont l'une des formules suivantes :

### 1)

Formule I : Z-A-Y
dans laquelle :
- Z est une fonction polymérisable par polymérisation radicalaire de type glycidyle ou éthylénique,
- Y est un précurseur de la fonction ionique tel que décrit ci-dessus, et
- A est une chaîne aliphatique ou aromatique ou un dérivé d'une telle chaîne.

Avantageusement, le précurseur de la fonction ionique sera de type SO₃SiR'₃ avec R' étant un groupement aliphatique ou aromatique. En effet, ce type de précurseur est très facilement hydrolysable par simple contact avec de l'eau.

Le monomère de formule I peut être évaporé seul dans une enceinte de plasma ou avec d'autres monomères fonctionnalisés ou non. Un initiateur de polymérisation radicalaire peut être ajouté tel que l'azobisisobutyronitrile (AIBN), le peroxyde de benzoyle, le peroxyde de tertiobutyle et plus généralement un peroxyde organique.

### 2)

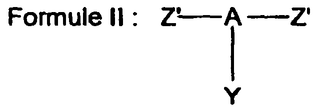

dans laquelle:
- A est une chaîne aromatique ou aliphatique ou un dérivé d'une telle chaîne,
- Z' est une fonctionnalité polymérisable par polycondensation tel qu'un acide, un anhydride, un alcool, une amine, un halogénure ou une fonction urée, et
- Y est un précurseur de la fonction ionique tel que décrit précédemment.

Dans le cas de l'utilisation d'un tel monomère de formule II, il faut utiliser en même temps un monomère de la formule III suivante :

### 3)

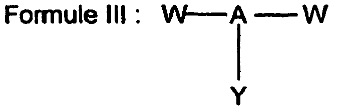

dans laquelle W est une fonction chimique polymérisable différente de Z', et susceptible de réagir avec la fonction polymérisable Z' du polymère de formule II par polycondensation pour former un polymère.

Dans ce monomère de formule III, Y peut être une fonctionnalité identique à la fonctionnalité Y décrite précédemment ou ne pas être présent.

Ainsi, dans l'invention, la membrane polymérique à conduction ionique est fabriquée par co-évaporation thermique sous vide. Les monomères solides ou liquides sont placés dans des creusets dans une enceinte sous vide pouvant descendre à une pression de 10⁻⁶ bar. Le substrat à revêtir, sur lequel la membrane est formée, est placé sur un porte substrat tournant chauffé ou non en fonction des monomères utilisés. Le substrat est en général l'électrode. Il peut donc présenter un empilement de couches. Le substrat comprend par exemple le catalyseur, tel que du platine. De préférence, le substrat est du silicium ou du carbone avantageusement poreux. Le plus préférablement, le substrat est en silicium, de préférence poreux. Une fois le vide atteint grâce à l'utilisation d'une pompe primaire et d'une pompe secondaire de type turbo-moléculaire, les creusets contenant les monomères sont chauffés grâce à une source à effet joule ou une source de type organique ou OLED. Les caches des substrats et des sources sont fermés. Une fois les températures atteintes, les caches des sources sont ouverts afin de mesurer le flux de vapeur de chaque monomère à l'aide de microbalances à quartz. Les températures d'évaporation des monomères sont corrigées au moyen des températures des sources et ce, afin d'obtenir le flux de vapeur adéquat pour chaque monomère. Le cache du substrat est ensuite ouvert et les monomères viennent condenser et polymériser sur le substrat. Une balance à quartz mesure la masse et l'épaisseur du dépôt.
- Plusieurs monomères peuvent ainsi être évaporés ou sublimés simultanément. L'enceinte peut également contenir des éléments supplémentaires susceptibles de contribuer à améliorer la polymérisation, et notamment les polymérisations radicalaires des monomères, tels qu'une lampe UV ou des filaments chauffés à haute température dans le cas de l'utilisation d'amorceur de polymérisation radicalaire.

Les polymères obtenus peuvent être de type polystyrène, polyimide, polyamide, polyalcoolfurfurylique, polyacrylate, polyacrylamide, polycarbazole, polyurée, polyuréthane, polyester, polyépoxy, polyphénylquinoxaline, etc... contenant au moins une fonction précurseur de la fonction de conduction ionique.

Ensuite, la membrane formée sert à fabriquer un coeur de pile à combustible. Le coeur de pile sert lui-même à fabriquer une pile à combustible.

Afin de mieux comprendre l'invention, on va maintenant en décrire à titre d'exemple purement illustratif et non limitatif un mode de mise en oeuvre.

### Exemple

1g de phényle éthylène sulfonate est placé dans un creuset, 1g de styrène dans un autre creuset et 200 mg de peroxyde de tertiobutyle dans un troisième creuset dans l'enceinte d'évaporation thermique sous vide.

Le substrat est un disque en silicium d'un diamètre de 10 cm.

Les caches des sources et des substrats sont en position fermée. Le vide est descendu à une pression de 10⁻⁵ bar à l'aide d'une pompe primaire et d'une pompe turbomoléculaire. Une fois le vide atteint, les creusets sont chauffés à une température respective de 60°C, 70°C et 40°C à l'aide d'une source de type OLED. Une fois les températures atteintes, les caches des sources sont ouverts afin de mesurer le flux en mol/min de chacun des composés. Les flux sont ensuite ajustés en réglant la température afin d'obtenir un flux de 0,1 µg/cm²/s de phényle éthylène sulfonate, de 0,15 µg/cm²/s de styrène et de 0,01µg/cm²/s de peroxyde de tertiobutyle.

Les flux sont mesurés à l'aide de balances à quartz et correspondent à ce qui se dépose sur le substrat car un étalonnage des balances à quartz relatives à la source et au substrat a préalablement été effectué via des mesures de masse.

Une fois les réglages de flux réalisés, le cache du substrat est ensuite ouvert afin de réaliser le dépôt sur le substrat de silicium. Au bout d'une heure environ, un film de polymère ayant une épaisseur de l'ordre de 5 µm est obtenu. Les caches des sources sont refermés et la pression est ramenée à la pression atmosphèrique

Le film est ensuite hydrolysé dans une solution d'acide chlorhydrique de concentration 1 mol/l pendant 4 heures à 60°C.

La conductivité protonique de la membrane est ensuite mesurée par impédancemétrie. La conductivité est évaluée à 8 10⁻³s/cm.

## Revendications

1. Procédé de fabrication d'une membrane polymérique à conduction ionique de pile à combustible **caractérisé en ce qu'**il comprend une étape de dépôt chimique par vaporisation plasma d'au moins deux monomères polymérisables identiques ou différents, chacun comprenant :
- au moins un groupement polymérisable, et
- au moins un groupement précurseur de la fonction de conduction ionique choisi dans le groupe formé par un ester de phosphonyle, un ester d'acyle, un ester de sulfonyle, un halogénure de carbonyle, ou un halogénure de thionyle.

2. Procédé selon la revendication 1 **caractérisé en ce que** lesdits au moins deux monomères sont identiques et portent un groupement polymérisable par polymérisation radicalaire.

3. Procédé selon la revendication 2 **caractérisé en ce que** ledit groupement polymérisable est un groupe glycidyle ou éthylénique.

4. Procédé selon la revendication 1 **caractérisé en ce que** lesdits au moins deux monomères sont différents l'un de l'autre, au moins l'un des monomères portant deux groupements polymérisables qui sont différents des deux groupements polymérisables de l'autre monomère, tout en étant polymérisables par polycondensation avec ces deux groupements polymérisables de l'autre monomère.

5. Procédé selon la revendication 4 **caractérisé en ce que** les groupements polymérisables sont choisis parmi un groupe acide, un groupe anhydride, un groupe alcool, un groupe halogénure, un groupe urée, et un groupe amine.

6. Procédé selon l'une quelconque des revendications précédentes **caractérisé en ce que** chaque monomère est constitué d'une chaîne aromatique ou aliphatique portant ledit au moins un groupement polymérisable et ledit au moins un groupement précurseur de la fonction de conduction ionique.

7. Coeur de pile à combustible comprenant une membrane obtenue par le procédé selon l'une quelconque des revendications précédentes.

8. Pile à combustible comprenant une membrane obtenue par le procédé selon l'une quelconque des revendications 1 à 6.

9. Pile à combustible comprenant un coeur de pile selon la revendication 7.

## Claims

1. Method of manufacturing an ion-conducting polymeric membrane for a fuel cell, **characterised in that** it comprises a step of chemical deposition by plasma vaporisation at least two identical or different polymerisable monomers, each comprising:
- at least one polymerisable group, and
- at least one precursor group of the ion-conducting function selected from a group comprising a phosphonyl ester, an acyl ester, a sulphonyl ester, a carbonyl halide or a thionyl halide.

2. Method as claimed in claim 1, **characterised in that** said at least two monomers are identical and carry a group which can be polymerised by radical polymerisation.

3. Method as claimed in claim 2, **characterised in that** said polymerisable group is a glycidyl or ethylenic group.

4. Method as claimed in claim 1, **characterised in that** said at least two monomers are different from one another, at least one of the monomers carrying two polymerisable groups which are different from the two polymerisable groups of the other monomer whilst being polymerisable by polycondensation with these two polymerisable groups of the other monomer.

5. Method as claimed in claim 4, **characterised in that** the polymerisable groups are selected from an acid group, an anhydride group, an alcohol group, a halide group, a urea group and an amine group.

6. Method as claimed in any one of the preceding claims, **characterised in that** each monomer is constituted of an aromatic or aliphatic chain carrying said at least one polymerisable group and said at least one precursor group of the ion-conducting function.

7. Fuel cell core comprising a membrane obtained by the method as claimed in any one of the preceding claims.

8. Fuel cell comprising a membrane obtained by the method as claimed in any one of claims 1 to 6.

9. Fuel cell comprising a cell core as claimed in claim 7.

## Patentansprüche

1. Verfahren zur Herstellung einer ionenleitfähigen Polymermembran einer Brennstoffzelle, **dadurch gekennzeichnet, dass** es einen Schritt der plasmaunterstützten chemischen Gasphasenabscheidung von wenigstens zwei identischen oder verschiedenen polymerisierbaren Monomeren umfasst, wobei jedes umfasst:
- wenigstens eine polymerisierbare Gruppe, und
- wenigstens eine Vorläufergruppe der ionenleitfähigen funktionellen Gruppe, ausgewählt aus der Gruppe bestehend aus einem Posphonylester, einem Acylester, einem Sulfonylester, einem Carbonylhalogenid oder einem Thionylhalogenid.

2. Verfahren nach Anspruch 1, **dadurch gekennzeichnet, dass** die wenigstens zwei Monomere identisch sind und eine durch Radikalpolymerisation polymerisierbare Gruppe enthalten.

3. Verfahren nach Anspruch 2, **dadurch gekennzeichnet, dass** die polymerisierbare Gruppe eine Glycidyl- oder ein Ethylengruppe ist.

4. Verfahren nach Anspruch 1, **dadurch gekennzeichnet, dass** die wenigstens zwei Monomere voneinander verschieden sind, wobei wenigstens eines der Monomere zwei polymerisierbare Gruppen enthält, die von den zwei polymerisierbaren Gruppen des anderen Monomers verschieden sind, und wobei diese mit den beiden polymerisierbaren Gruppen des anderen Monomers durch Polykondensation polymerisierbar sind.

5. Verfahren nach Anspruch 4, **dadurch gekennzeichnet, dass** die polymerisierbaren Gruppen ausgewählt sind aus einer Säuregruppe, einer Anhydridgruppe, einer Alkoholgruppe, einer Halogenidgruppe, einer Harnstoffgruppe und einer Aminogruppe.

6. Verfahren nach einem der vorherigen Ansprüche, **dadurch gekennzeichnet, dass** jedes Monomer aus einer aromatischen oder aliphatischen Kette besteht, die die wenigstens eine polymerisierbare Gruppe und die wenigstens eine Vorläufergruppe der ionenleitfähigen funktionellen Gruppe enthalten.

7. Brennstoffzellenkern, umfassend eine Membran, die nach einem Verfahren gemäß einem der vorherigen Ansprüche erhalten wurde.

8. Brennstoffzelle, umfassend eine Membran, die nach einem Verfahren gemäß einem der Ansprüche 1 bis 6 erhalten wurde.

9. Brennstoffzellen, umfassend einen Zellenkern nach Anspruch 7.
